# EUROPEAN PATENT APPLICATION

(11) **EP 1 347 629 A2**
(43) Date of publication of application: **24.09.2003**
(21) Application number: 03006154.3
(22) Date of filing: 18.03.2003
(51) Int. Cl.: H04N 1/21

(54) **Digital camera and image processing apparatus**

(30) Priority: 20.03.2002 JP 2002079249
(71) Applicant: Fuji Photo Film Co., Ltd., Kanagawa-ken (JP)
(72) Inventor: Terashita, Takaaki, Fuji Photo Film Co., Ltd., Ashigarakami-gun, Kanagawa-ken (JP)
(74) Representative: Klunker . Schmitt-Nilson . Hirsch

(57) **Abstract**

When image processing is carried out on image data obtained by a digital camera, a reproduced image intended by a photographer can be obtained and image processing efficiency can be improved. An image processing condition set by a setting unit 10 of a digital camera A and information representing selection of whether or not image processing is carried out by the digital camera are generated as accompanying information. An image processing unit 25 carries out image processing on image data based on the image processing condition that has been set, in response to the selection of carrying out the image processing. A recording unit 30 records in a recording medium the image data subjected to the image processing by the processing unit 25 or the image data whose image processing has been selected to be not carried out, together with the accompanying information added thereto.

## Description

### BACKGROUND OF THE INVENTION

### Field of the Invention

The present invention relates to a digital camera and an image processing apparatus that carries out image processing on image data obtained by the digital camera.

### Description of the Related Art

By using an electronic digital still camera (hereinafter referred to as a digital camera) , an image obtained by photography is recorded as digital image data in a recording medium such as an internal memory of the digital camera or an IC card. The image can be displayed on a monitor or printed by a printer, based on the digital image data. In the case where an image obtained by a digital camera is printed, the print is expected to have as high a quality as a print generated from a negative film.

A digital camera comprises elements such as an optical system (a lens iris, a shutter, a flash), an imaging system (CCDs and a signal processing unit), a control system (for AE, AWB, and AF), and a recording/reproducing system (for compression/decompression, memory control, and display). As factors affecting a quality of an image to be reproduced can be listed color temperature of the flash, AE (Automatic Exposure) processing, AWB (Automatic White Balance) processing, a color filter for CCD color separation, the number of pixels, gradation conversion, and a matrix operation for obtaining brightness/color difference signals, in addition to performance of a lens of a digital camera. In a digital camera, these factors are controlled to generate image data that enable reproduction of a high-quality image.

Recently, in order to reflect an intention of a photographer, the photographer can set a fixed light source mode, an image processing condition (such as an AWB processing condition, and a condition for related image processing such as gradation conversion, sharpness processing, and saturation processing), a preference (for monochrome, a sepia color, beautiful skin, or the like), a photography mode (such as long exposure or underexposure), and a scene selection mode (such as a portrait mode, a distant view mode, a night view mode, a moving object mode, and a close-up mode), by using some digital cameras. Image processing is carried out by such a digital camera on image data obtained by photography, according to the settings. The image processing carried out by the digital camera also affects an image quality.

Meanwhile, by using a printer or a monitor, a photographer himself/herself can freely print or display an image he/she photographed with a digital camera, without involving a DPE store . However, in order to obtain a print of sufficient quality, correction is necessary after printing or displaying image data. Consequently, this operation becomes considerably troublesome and inefficient if a large amount of prints are to be generated. For this reason, users wish to obtain high-quality prints by requesting printing of images obtained by digital cameras from DPE stores, as in the case of conventional prints generated from photographic films.

However, the factors affecting a quality of a reproduced image varies, depending on a manufacturer or a model of a digital camera. Therefore, in order to reproduce a high-quality print, a DPE store needs to carry out printing while considering the characteristic of each digital camera of a specific model, since the DPE store generates prints from image data obtained by digital cameras of various models . For this reason, a system for obtaining a high-quality print has been proposed (Japanese Unexamined Patent Publication No. 11 (1999)-220687). In this system, the model of a digital camera is judged from tag information recorded by the digital camera, and image processing is carried out on image data by using an image processing condition that varies in accordance with the digital camera model. In this manner, a high-quality print can be obtained, regardless of the digital camera model.

However, since tens of new models of digital cameras are released every year, determining an image processing condition according to a characteristic of a digital camera model which generated image data while understanding characteristics of all digital camera models is actually difficult and not practical. Therefore, a method of determining an image processing condition by inferring a characteristic of a digital camera model from image data has been proposed.

Calculations performed for image data analysis to infer a characteristic of a digital camera model from image data are complex. Furthermore, the characteristic can only be inferred, and complete understanding of all digital camera models and their characteristics is impossible. Therefore, high-quality image processing is still difficult.

In the case of the above-described digital camera that enables image processing according to an intention of a photographer, an apparatus for image processing cannot understand what kind of image a photographer desires or what kind of image processing has been carried out on image data. Therefore, image processing may not reflect the intention, and the photographer may not be able to obtain a desirable image in some cases.

### SUMMARY OF THE INVENTION

The present invention has been conceived based on consideration of the above circumstances. An object of the present invention is therefore to simplify image processing on image data obtained by a digital camera and to provide a digital camera and an image processing apparatus that enable high quality image reproduction according to an intention of a photographer.

A first digital camera of the present invention comprises:
photography means for obtaining image data by carrying out photography;
setting means for setting an image processing condition for the image data and for selecting between whether or not image processing corresponding to the image processing condition is carried out on the image data, at the time of photography by the photography means;
accompanying information addition means for generating information representing the setting by the setting means as accompanying information and for adding the accompanying information to the image data;
processing means for carrying out the image processing on the image data according to the image processing condition set by the setting means, in the case where the selection of carrying out the image processing has been made by the setting means; and
storage means for storing the image data processed by the processing means or the image data regarding which the selection of not carrying out the image processing has been made by the setting means, together with the accompanying information added thereto.

The "image processing condition" set by the setting means includes direct image processing conditions that are desired by a photographer, such as an AWB processing condition and conditions of related image processing for gradation, sharpness, saturation, and the like. The image processing condition also includes indirect image processing conditions such as setting related to the image processing carried out by the digital camera. For example, the indirect image processing conditions refer to a fixed light source mode, a preference (for monochrome, a sepia color, beautiful skin, or the like), a photography mode (such as long exposure or underexposure), and a scene selection mode (such as a portrait mode, a distant view mode, a night view mode, a moving object mode, or a close-up mode).

In order to eliminate an effect of photography according to erroneous setting (for the direct image processing conditions and for the indirect image processing conditions) and according to a previous image processing condition that was not corrected by mistake, the image processing condition in the accompanying information is preferably correctable in the case where the setting means has set the image processing to be not carried out. This correction may be carried out by the digital camera itself or by an image processing apparatus that uses the image data thereafter.

A second digital camera of the present invention comprises:
photography means for obtaining image data;
accompanying information addition means for adding information representing the fact that image processing has not been carried out on the image data, as accompanying information to the image data; and
storage means for storing the image data added with the accompanying information.

In other words, the second digital camera of the present invention does not carry out image processing on the image data obtained by the digital camera, but adds to the image data the accompanying information representing the fact that the image processing has not been carried out on the image data by the digital camera.

It is preferable for the second digital camera of the present invention to further comprise setting means for setting an image processing condition for the image data at the time of photography by the photography means so that the accompanying information addition means can add information representing the image processing condition and the fact that the image processing has not been carried out on the image data, as the accompanying information to the image data.

A first image processing apparatus of the present invention comprises:
accompanying information reading means for reading accompanying information from image data obtained by a digital camera and added with the accompanying information representing an image processing condition and whether or not image processing has been carried out on the image data by the digital camera according to the image processing condition; and
processing means for carrying out the image processing according to the image processing condition on the image data if the image data are added with the accompanying information representing the fact that the image processing has not been carried out by the digital camera.

A second image processing apparatus of the present invention comprises:
accompanying information reading means for reading accompanying information from image data obtained by a digital camera and added with the accompanying information representing whether or not image processing has been carried out on the image data by the digital camera; and
processing means for carrying out the image processing on the image data added with the accompanying information representing the fact that the image processing has not been carried out by the digital camera.

According to the first digital camera of the present invention, selection can be made between whether or not the image processing corresponding to the image processing condition set by the photographer with use of the setting means is carried out by the digital camera, and the selection as well as the image processing condition are added to the image data as the accompanying information thereof. In the case where the image processing has been selected to be not carried out by the digital camera, the digital camera does not carry out the image processing. Therefore, a load on the digital camera can be reduced while the image processing apparatus that later carries out the image processing on the image data can understand the image processing intended by the photographer by simply referring to the accompanying information. In this manner, the time that would otherwise be necessary for image data analysis can be saved and the image processing can be carried out for a desirable reproduced image. In the case where the image processing has been selected to be carried out by the digital camera, the image processing apparatus that later carries out image processing can also understand the image processing carried out by the digital camera. Therefore, image quality degradation of a reproduced image due to double image processing (by the digital camera and by the image processing apparatus) can be prevented and the time necessary for the image processing can be shortened.

The second digital camera of the present invention does not carry out image processing on the image data obtained by photography. By adding to the image data the information representing the fact that the image processing has not been carried out, the image processing apparatus that later carries out the image processing can understand the fact and can carry out the image processing without inferring a characteristic according to the model of the digital camera. In this manner, the image processing can be carried out efficiently.

The first and second image processing apparatuses of the present invention can carry out the image processing efficiently on the image data obtained by the digital cameras of the present invention.

### BRIEF DESCRIPTION OF THE DRAWINGS

Figure 1 is a block diagram showing a configuration of a digital camera A as an embodiment of the first digital camera of the present invention;
Figure 2 is a flow chart showing the operation of the digital camera A shown in Figure 1;
Figure 3 is a block diagram showing a configuration of a digital camera B as an embodiment of the second digital camera of the present invention;
Figure 4 is a flow chart showing the operation of the digital camera B shown in Figure 3;
Figure 5 is a block diagram showing a configuration of an image reproduction apparatus as an embodiment of an image processing apparatus of the present invention; and
Figure 6 is a flow chart showing the operation of the image reproduction apparatus shown in Figure 5.

### DESCRIPTION OF THE PREFERRED EMBODIMENTS

Hereinafter, embodiments of a digital camera and an image processing apparatus of the present invention will be explained with reference to the accompanying drawings.

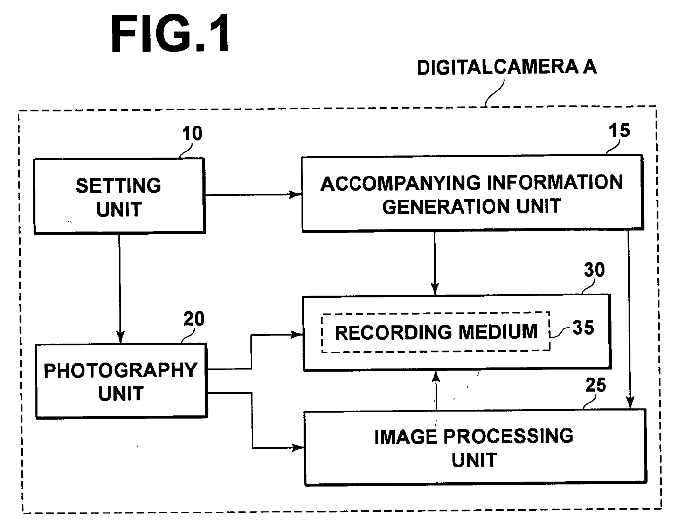

Figure 1 is a block diagram showing a configuration of a digital camera A as an embodiment of the first digital camera of the present invention. As shown in Figure 1, the digital camera A comprises a setting unit 10, a photography unit 20, an accompanying information generation unit 15, an image processing unit 25, and a recording unit 30. The setting unit 10 sets a desired one of photography modes among "ordinary", "portrait", "distant view", and "night view" modes, and a desired one of preference modes among "ordinary", "sepia", and "beautiful skin" modes for an image to be reproduced based on image data obtained by photography. The setting unit 10 also enables selection between whether or not image processing according to the photography mode and the preference mode that have been set is carried out by the digital camera A. The photography unit 20 carries out photography according to the photography mode set by the setting unit 10, and obtains the image data. The accompanying information generation unit 15 generates accompanying information comprising image processing conditions representing the photography mode and the preference mode that have been set by the setting unit 10 and information representing the selection of carrying out or not carrying out the image processing. The image processing unit 25 carries out the image processing on the image data obtained by the photography unit 20 according to the photography mode and the preference mode set by the setting unit 10 in the case where the image processing has been selected to be carried out by the digital camera A. The recording unit 30 records in a recording medium 35 the accompanying information as tag information of the image data processed by the image processing unit 25, in addition to the image data processed by the processing unit 25. For the image data regarding which the setting unit 10 has set the image processing to be not carried out by the digital camera A, the recording unit 30 records in the recording medium 35 the accompanying information as the tag information of the image data, in addition to the image data.

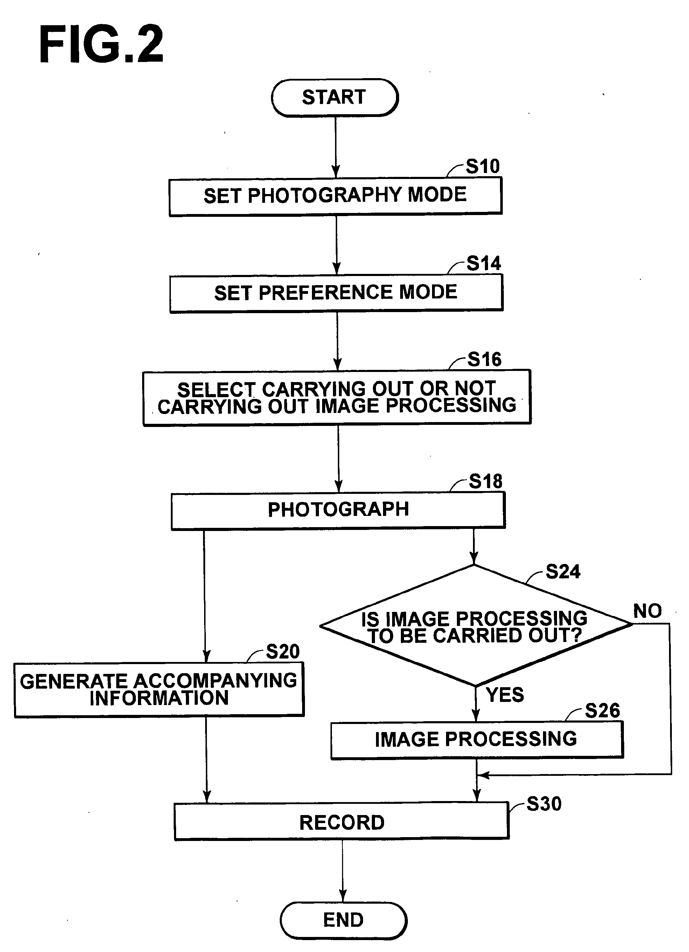

Figure 2 is a flow chart showing the operation of the digital camera A in detail. At the time of photography by the digital camera A, a photographer sets the preference mode for the reproduced image and the photography mode by using the setting unit 10 (Steps S10, S14). The setting unit 10 of the digital camera A can provide a menu of the photography mode comprising the "portrait", "distant view", and "night view" modes, and a menu of the preference mode comprising the "sepia" and "beautiful skin" modes. If the photographer does not make selection from the menus, the setting unit 10 uses the "ordinary" photography mode and the "ordinary" preference mode. The photographer then makes the selection between whether or not the image processing is carried out by the digital camera A, by using the setting unit 10 (Step S16). When the photographer presses down a shutter (not shown) of the photography unit 20 after setting the photography mode and the preference mode in the above manner, the photography unit 20 carries out photography on a subject according to the photography mode that has been set, and obtains the image data (Step S18). At the same time, the accompanying information generation unit 15 generates the accompanying information comprising the image processing conditions representing the photography mode and the preference mode set by the setting unit 10 and the selection of carrying out or not carrying out the image processing (Step S20).

Meanwhile, in the case where the photographer has selected not carrying out the image processing by using the setting unit 10 (Step S24 : NO), the photography unit 20 outputs the image data obtained by photography to the recording unit 30. The recording unit 30 adds the accompanying information generated by the accompanying information generation unit 15 for the image data as the tag information to the image data sent from the photography unit 20, and records the image data added with the accompanying information in the recording medium 35 (Step S30). In the case where the photographer has selected carrying out the image processing at Step S24 by using the setting unit 10 (Step S24: YES), the photography unit 20 outputs the image data obtained by photography to the image processing unit 25 of the digital camera A. The image processing unit 25 carries out the image processing on the image data according to the intention of the photographer, based on the image processing conditions comprising the photography mode and the preference mode included in the accompanying information generated by the accompanying information generation unit 15, and outputs the processed image data to the recording unit 30 (Step S26). The recording unit 30 records in the recording medium 35 (Step S30) the processed image data output from the image processing unit 25 added with the tag information comprising the accompanying information generated for the image data by the accompanying information generation unit 15, or the image data that have not been processed by the processing unit 25 but added with the accompanying information in the case where the image processing has been judged to be not carried out by the digital camera A at Step S24. In this manner, the digital camera records the image data and the accompanying information to end the operation.

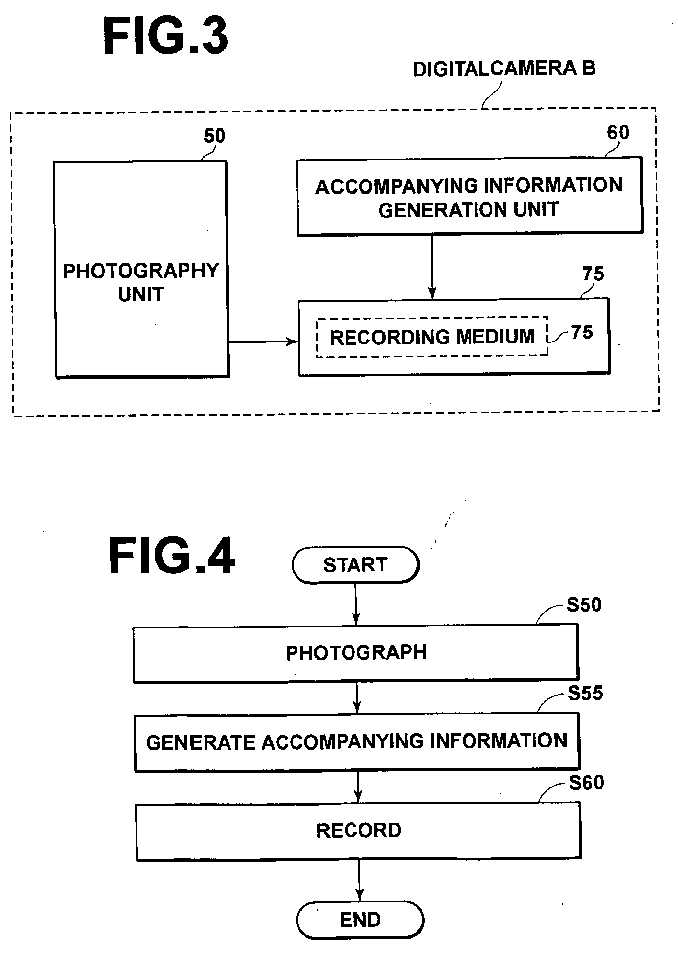

Figure 3 is a block diagram showing a configuration of a digital camera B as an embodiment of the second digital camera of the present invention.

As shown in Figure 3, the digital camera B in this embodiment comprises a photography unit 50 having mechanisms of focus adjustment, iris adjustment and a shutter that are not shown in Figure 3 and for obtaining image data by carrying out photography on a subject, an accompanying information generation unit 60 for generating accompanying information representing the fact that image processing has not been carried out on the image data obtained by the photography unit 50, and a recording unit 70 for recording in a recording medium 75 the accompanying information generated by the accompanying information generation unit 60 by adding the accompanying information as tag information to the image data obtained by the photography unit 50, in addition to the image data.

Figure 4 is a flow chart showing the operation of the digital camera B in detail. As shown in Figure 4, a photographer carries out necessary operations such as focus adjustment, and presses down the shutter that is not shown. The digital camera B carries out photography on the subject and obtains the image data. The image data are output to the recording unit 70 (Step S50). The accompanying information generation unit 60 generates the accompanying information representing the fact that image processing has not been carried out on the image data by the digital camera B, and outputs the information to the recording unit 70 (Step S55). The recording unit 70 adds the accompanying information generated by the accompanying information generation unit 60 as the tag information to the image data obtained by the photography unit 50, and records the image data added with the accompanying information in the recording medium 75 (Step S60). In this manner, the digital camera B records the image data and the accompanying information to end the operation.

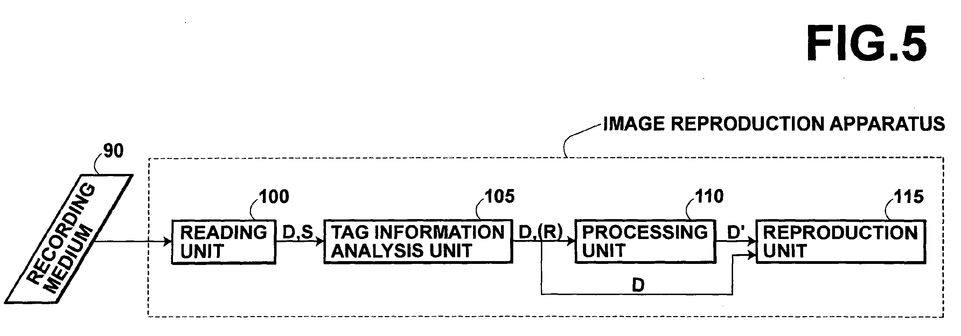

Figure 5 is a block diagram showing the configuration of an image reproduction apparatus as an embodiment of an image processing apparatus that carries out image processing on the image data obtained by the digital cameras A and B shown in Figures 1 and 3.

As shown in Figure 5, the image reproduction apparatus in this embodiment comprises a reading unit 100, a tag information analysis unit 105, a processing unit 110, and a reproduction unit 115. The reading unit 100 reads the image data and the tag information added to the image data (hereinafter referred to as the image data D and the accompanying information S, respectively) from the recording medium that stores the image data obtained by the digital camera A or B added with the accompanying information (hereinafter referred to as the recording medium 90). The tag information analysis unit 105 analyzes the tag information S obtained by the reading unit 100, and determines whether or not the image processing conditions (hereinafter referred to as the image processing conditions R) have been set for the image data D, for what kind of image processing the image processing conditions R have been set in the case where the image processing conditions R have been set, and whether or not the image processing according to the image processing conditions R has been carried out by the digital camera in the case where the image processing conditions R have been set or in the case where the selection of carrying out the image processing has been made. The processing unit 110 carries out the image processing on the image data D according to the image processing conditions R obtained by the tag information analysis unit 105, in the case where the image processing has not been carried out on the image data by the digital camera. The processing unit also carries out image processing for obtaining image data D' by determining an image processing condition through analysis of the image data D, in the case where the image processing conditions R have not been set. The reproduction unit 115 obtains an image by reproducing the image data D' obtained by the processing unit 110 or the image data D that were output from the tag information analysis unit 105 and have been subjected to the image processing by the digital camera.

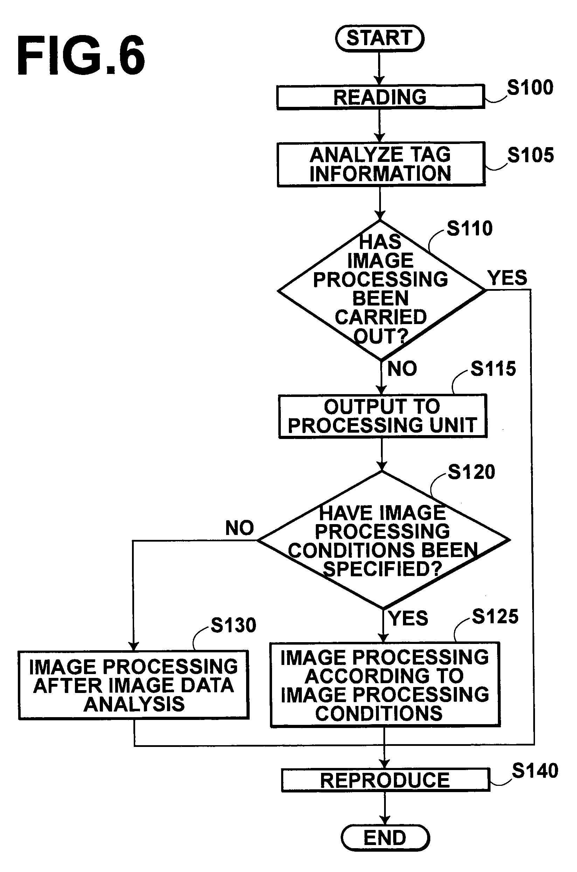

Figure 6 is a flow chart showing in detail the operation of the image reproduction apparatus shown in Figure 5 . The reading unit 100 reads the image data D and the tag information S from the recording medium 90 (Step S100). The tag information analysis unit 105 analyzes the tag information S added to the image data D (Step S105), and confirms whether or not the image processing has been carried out on the image data D by the digital camera. In the case where the image processing has been carried out (Step S110: YES), the image data D are output to the reproduction unit 115, and the reproduction unit 115 obtains the reproduced image through reproduction processing (Step S140).

Meanwhile, in the case where the tag information S indicates the fact that the image processing has not been carried out on the image data D (that is, the accompanying information S indicates that the image processing has not been carried out on the image data D in the digital camera A or B), the tag information analysis unit 105 outputs the image data D to the processing unit 110. In the case where the image processing conditions R set for the image data D have been specified in the tag information S (this is the case of the image data D obtained by the digital camera A), the image data D are output to the processing unit 110 together with the image processing conditions R (Step S115). The processing unit 110 confirms whether or not the image processing conditions R accompany the image data D sent from the tag information analysis unit 105 (Step S120). If the image processing conditions R have been added to the image data D (Step S120: YES), the processing unit 110 carries out the image processing on the image data D according to the image processing conditions R (Step S125). For example, in the case where the "portrait" mode has been set as one of the image processing conditions R for the image data D, image processing for the portrait mode is carried out on the image data D. In the case where the "beautiful skin" mode has been set, image processing to cause a skin color to look beautiful is carried out. The processing unit 110 outputs to the reproduction unit 115 the processed image data D' generated by the image processing on the image data D in the above manner, and the reproduction unit 115 obtains the reproduced image through the reproduction processing (Step S140). In the case where the fact was found that the image processing conditions R have not been set for the image data D (that is, the case of the image data D obtained by the digital camera B) at Step S120 (Step S120: NO), the processing unit 110 analyzes the image data D, and determines the image processing condition to be used in the image processing. The processing unit 110 then carries out the image processing according to the image processing condition that has been determined (Step S130), and outputs the processed image data D' to the reproduction unit 115. The reproduction unit 115 carries out the reproduction processing and obtains the reproduced image (Step S140). In this manner, the image reproduction apparatus generates the reproduced image to end the operation.

As has been described above, according to the digital camera A as the embodiment of the first digital camera of the present invention, selection can be made between whether or not the image processing is carried out by the digital camera A according to the image processing conditions set by the photographer (the photography mode and the preference mode), and this selection is added together with the image processing conditions as the tag information to the image data. In the case where the image processing has been selected to be not carried out by the digital camera A, the digital camera A does not carry out the image processing. Therefore, a load on the digital camera A can be reduced. At the same time, the image reproduction apparatus shown in Figure 5 that reproduces the image data later can understand the image processing intended by the photographer, by simply analyzing the tag information. In this manner, the time that would otherwise be necessary for image data analysis can be saved and the desirable reproduced image can be obtained by carrying out the image processing. In the case where the image processing has been selected to be carried out by the digital camera A, the image processing apparatus that carries out image processing later can also understand the image processing carried out by the digital camera. Therefore, image quality degradation of the reproduced image due to double image processing (by the digital camera and by the image processing apparatus) can be prevented, and the processing time can be shortened.

According to the digital camera B as the embodiment of the second digital camera of the present invention, the digital camera B does not carry out image processing on the image data obtained by photography. By adding as the tag information to the image data the information representing the fact that the image processing has not been carried out, the image reproduction apparatus shown in Figure 5 that carries out the image processing later can understand the fact, and can carry out the image processing without inferring a characteristic caused by the model of the digital camera B. In this manner, the image processing can be carried out efficiently.

Although the preferable embodiments of the digital camera and the image processing apparatus of the present invention have been explained above, the digital camera and the image processing apparatus of the present invention are not necessarily limited to the embodiments described above. Various modifications, such as the kind of image processing conditions set by the digital camera and how the image data are provided from the digital camera to the image reproduction apparatus, can be made thereto, within the scope of the present invention.

For example, when the image processing is carried out by the image reproduction apparatus on the image data D that have not been subjected to the image processing by the digital camera A, the image processing is carried out on the image data D according to the image processing conditions R included in the tag information S. However, the image reproduction apparatus may further comprise confirmation means and correction means. The confirmation means displays the image data D on a monitor or the like of the image reproduction apparatus and confirms appropriateness of the image processing conditions R. The correction means corrects the image processing conditions R for the "distant view" in the case where the "portrait" mode has been set as one of the image processing conditions R for an obviously distant view image, for example. In this manner, image quality degradation caused by erroneous setting by the photographer can be prevented.

The correction means may comprise the digital camera so that the photographer can correct the modes once he/she noticed the mistake in the mode setting.

The digital camera B as the embodiment of the second digital camera of the present invention may have setting means for setting an image processing condition intended by the photographer (such as the photography mode and the preference mode) . In this case, if the image data obtained by the digital camera B are added with the information indicating the fact that the image processing has not been carried out by the digital camera B and the image processing condition that is intended by the photographer and set by the setting means, the image reproduction apparatus that carries out the image processing later on the image data can carry out the image processing according to the image processing condition that has been set. In this manner, inference of a characteristic caused by the model of the digital camera becomes unnecessary, and the reproduced image intended by the photographer can be obtained.

Furthermore, not only the photography mode and the preference mode described above but also any image processing conditions that can affect a quality of the reproduced image, such as a gradation conversion condition, a color correction condition, and a sharpness processing condition, can be used as the image processing conditions.

## Claims

1. A digital camera comprising:
photography means for obtaining image data by carrying out photography;
setting means for setting an image processing condition for the image data and for selecting between whether or not image processing corresponding to the image processing condition is carried out on the image data, at the time of photography by the photography means;
accompanying information addition means for generating information representing the setting by the setting means as accompanying information and for adding the accompanying information to the image data;
processing means for carrying out the image processing on the image data according to the image processing condition set by the setting means, in the case where the selection of carrying out the image processing has been made by the setting means; and
storage means for storing the image data processed by the processing means or the image data regarding which the selection of not carrying out the image processing has been made by the setting means, together with the accompanying information added thereto.

2. A digital camera comprising:
photography means for obtaining image data;
accompanying information addition means for adding information representing the fact that image processing has not been carried out on the image data, as accompanying information to the image data; and
storage means for storing the image data added with the accompanying information.

3. A digital camera as defined in Claim 2 further comprising:
setting means for setting an image processing condition for the image data at the time of photography by the photography means, wherein
the accompanying information addition means adds information representing the image processing condition and the fact that the image processing has not been carried out on the image data, as the accompanying information to the image data.

4. An image processing apparatus comprising:
accompanying information reading means for reading accompanying information from image data obtained by a digital camera and added with the accompanying information representing an image processing condition and whether or not image processing has been carried out on the image data by the digital camera according to the image processing condition; and
processing means for carrying out the image processing according to the image processing condition on the image data if the image data are added with the accompanying information representing the fact that the image processing has not been carried out by the digital camera.

5. An image processing apparatus comprising:
accompanying information reading means for reading accompanying information from image data obtained by a digital camera and added with the accompanying information representing whether or not image processing has been carried out on the image data by the digital camera; and
processing means for carrying out the image processing on the image data added with the accompanying information representing the fact that the image processing has not been carried out by the digital camera.
